# EUROPÄISCHE PATENTANMELDUNG

(11) **EP 1 632 390 A2**
(43) Veröffentlichungstag der Anmeldung: **08.03.2006**
(21) Anmeldenummer: 05018960.4
(22) Anmeldetag: 31.08.2005
(51) Int. Cl.: B60N 2/28

(54) **Kindersitz für ein Fahrzeug**

(30) Priorität: 01.09.2004 DE 102004042045
(71) Anmelder: HS Products Engineering GmbH, 82239 Alling (DE)
(72) Erfinder: Ziegenbein, Werner, 81929 München (DE)
(74) Vertreter: Eisenführ, Speiser & Partner

(57) **Zusammenfassung**

Ein Kindersitz 1, welcher an einem Fahrzeugsitz befestigt werden kann, mit einem eine Sitzfläche 2 und eine Rückenlehne 3 aufweisenden Sitzbereich, mit sitzintegrierten Schultergurten 5, welche um Umlenkstellen 7 in verschiedenen Höhen geführt werden können, und einer wenigstens einem Energieabsorber 10 aufweisenden Kraftbegrenzereinrichtung zur Verringerung der Rückhaltekräfte der Schultergurte 5 im Crashfall, wobei die Umlenkstellen 7 und die Rückenlehne 3 oder Teile der Rückenlehne'an einem gegenüber dem Sitzbereich 4 schwenkbaren Träger 9 angeordnet sind und der Träger 9 gegen den wenigstens einen Energieabsorber 10 verschwenkbar um eine Schwenkachse 12 gelagert ist.

## Beschreibung

Die Erfindung betrifft einen Kindersitz, welcher an einem Fahrzeugsitz zu befestigen ist, nach dem Oberbegriff des Patentanspruches 1.

Ein derartiger, beispielsweise aus DE 101 07 874 A1 bekannter Kindersitz beinhaltet eine Sitzfläche, die eine Rückenlehne und einen Sitzbereich aufweist. Ferner ist im Kindersitz ein Sicherheitsgurtsystem integriert, welches Schultergurte aufweist. Die Schultergurte können in Abhängigkeit von der Kindergröße in verschiedenen Höhen um Umlenkstellen im Bereich der Rückenlehne geführt werden. Ferner ist eine Kraftbegrenzereinrichtung vorgesehen zur Begrenzung der maximalen Gurtkraft auf eine Kraftbegrenzungsschwelle in Abhängigkeit von der Größe und dem Gewicht des zu transportierenden Kindes. Die Kraftbegrenzereinrichtung beinhaltet hierzu verformbare stabförmige Umlenkstellen aus Metall oder Kunststoff, um die die Schultergurte in den einstellbaren Höhenlagen geführt sind. Bei einer weiteren Ausgestaltung der bekannten Kraftbegrenzereinrichtung werden die Umlenkungen an deformierbaren Blechstreifen befestigt. Bei der energieabsorbierenden Verformung der stabförmigen Umlenkstellen oder der Blechstreifen, ergibt sich ein Nachgeben der angelegten Schultergurte, wobei sich der Körper des Kindes von der Rückenlehne des Sitzes weg bewegt.

Ferner ist aus der DE 196 10 917 C2 ein Kindersicherheitssitz bekannt, bei welchem zur Anpassung an die Größe des Kindes in unterschiedlichen Höhen Umlenkstellen für die Schultergurte vorgesehen sind, wobei zur Erzielung einer Gurtkraftbegrenzereinrichtung die Schultergurte über nachgiebige Biegeelemente geführt sind. Auch hierbei ergibt sich eine Verlängerung der Schultergurte, so dass der Körper des Kindes sich von der Rückenlehne des Kindersitzes wegbewegt.

Aufgabe der Erfindung ist es, einen Kindersitz der eingangsgenannten Art zu schaffen, bei welcher bei aktivierter Kraftbegrenzereinrichtung der Körper des angegurteten Kindes an der Rückenlehne abgestützt bleibt.

Diese Aufgabe wird erfindungsgemäß durch die kennzeichnenden Merkmale des Patentanspruches 1 gelöst. Vorteilhafte Weiterbildungen der Erfindung sind in den Unteransprüchen angegebenen.

Bei der Erfindung sind die Umlenkstellen und die Rückenlehne öder Teile der Rückenlehne, insbesondere die im oberen Bereich des Rückens anliegenden Teile der Rückenlehne an einem gegenüber dem Sitzbereich schwenkbaren Träger angeordnet, wobei der Träger zusammen mit der Rückenlehne bzw. den daran befestigten Rückenlehnenteilen gegen wenigstens einen Energieabsorber der Kraftbegrenzereinrichtung verschwenkbar ist. Hierdurch ist gewährleistet, dass der Rücken des Kindes immer an der Rückenlehne auch bei aktivierter Kraftbegrenzereinrichtung abgestützt ist.

Der schwenkbare Träger kann ganz oder teilweise als plattenförmiger Träger ausgebildet sein. `Vorzugsweise ist der schwenkbare Träger ganz oder teilweise als aus stabförmigen oder rohrförmigen Rahmenteilen bestehender Rahmen ausgebildet. Der Träger kann auch zum Teil plattenförmig und zum Teil rahmenförmig ausgebildet sein.

Der schwenkbare Träger ist vorzugsweise an einem starren Sitzrahmen, an welchem die Bestandteile des Sitzbereichs, nämlich die Sitzfläche und die Rückenlehne und gegebenenfalls Seitenteile befestigt sind, schwenkbar gelagert. Die hierzu vorgesehene Schwenkachse befindet sich vorzugsweise im unteren Bereich der Rückenlehne.

Der wenigstens eine Energieabsorber ist vorzugsweise zwischen dem starren Rahmen und dem verschwenkbaren Träger angeordnet. Es können auch mehrere Energieabsorber für die Kraftbegrenzerfunktion vorgesehen sein, welche in unterschiedlichen Höhen angeordnet sind.

Der schwenkbare Träger kann auch mehrteilig, insbesondere zweiteilig ausgebildet sein, wobei die beiden Trägerteile über eine weitere Schwenkachse miteinander verbunden sind. Diese weitere Schwenkachse liegt oberhalb der Schwenkachse, mit welcher der Träger am Kindersitz, insbesondere am starren Sitzrahmen gelagert ist.

Bei einem einteiligen Träger befindet sich der wenigstens eine Energieabsorber vorzugsweise zwischen dem Träger und einem Rahmenteil des starren Sitzrahmens. Vorzugsweise sind zwei Energieabsorber an beiden Seiten des einteiligen Trägers vorgesehen. Die Anordnung des Energieabsorbers bzw. der beiden Energieabsorber erfolgt bevorzugt in der Nähe oder am oberen Ende des Trägers. Es ist jedoch auch möglich, in der Schwenkachse, mit welcher der Träger am starren Kindersitzrahmen gelagert ist, beispielsweise in Form tortierbarer Elemente, beispielsweise eines oder mehrerer Torsionsstäbe den Energieabsorber vorzusehen.

Bei einem zweigeteilten Träger befindet sich der Energieabsorber oder befinden sich die beiden Energieabsorber vorzugsweise im Bereich der Schwenkachse, in welcher die beiden Trägerteile miteinander Verbunden sind. Hierzu können ebenfalls ein oder mehrere tortierbare Elemente, beispielsweise ein oder mehrere Torsionsstäbe in der Schwenkachse vorgesehen sein. Ferner können zu beiden Seiten des Trägers zwischen dem Träger und Rahmenteilen des starren Sitzrahmens etwa in Höhe der oben liegenden Schwenkachse, mit welcher die beiden Trägerteile verbunden sind, Energieabsorber vorgesehen sein.

Beim zweiteiligen Träger können ebenfalls im Bereich des oberen Endes beidseits des Trägers Energieabsorber zwischen dem Träger und beidseitigen Rahmenteilen des Sitzrahmens angeordnet sein. Der zweiteilige Träger ermöglicht die Verwendung des Kindersitzes sowohl bei großen Kindern, bei denen im Crashfall die Umlenkpunkte im oberen Bereich in der Nähe des oberen Endes des schwenkbaren Trägers angeordnet sind, als auch bei kleinen Kindern, bei denen die Umlenkpunkte weiter unten in der Nähe der die beiden Trägerteile verbindenden Schwenkachse angeordnet sind. Beim zweigeteilten Träger sind die Umlenkstellen vorzugsweise in unterschiedlichen Höhenlagen zwischen der die beiden Trägerteile verbindenden Achse und dem oberen Ende des Trägers in verschiedenen Höhenlagen angeordnet. Hierzu können die Umlenkstellen an einer gemeinsamen Stütze, beispielsweise in Stabform vorgesehen sein, welche in den verschiedenen Höhenlagen fixiert werden kann. Es können natürlich auch mehrere Umlenkstellenstützen in verschiedenen Höhenlagen, wie beim Stand der Technik vorgesehen sein.

In bevorzugter Weise kommt die Erfindung bei einem als Vorwärtssitz ausgebildeten Kindersitz zum Einsatz. Der Träger und die damit verbundenen Rückenlehnenteile werden bei z. B. durch überhöhte Beschleunigung oder Abbremsung des Fahrzeugs aktivierter Gurtkraftbegrenzereinrichtung aus einer bei normalem Fahrbetrieb vorgesehenen Ruheposition nach vorne geschwenkt, wobei der Körper des Kindes von den Schultergurten an der vorverlagerten Rückenlehne gehalten wird.

Vorzugsweise ist der Sitzrahmen mittels einer starren Verbindung, insbesondere Steckverbindung, die als sogenanntes Isofix-System ausgebildet sein kann, am Fahrzeugaufbau befestigt. Hierdurch wird eine starre Verbindung zwischen dem Sitzrahmen und damit zwischen der Schwenkachse, in welcher der Träger schwenkbar gelagert ist, und dem Fahrzeugaufbau hergestellt. Auf diese Weise ist der Energieabsorber bzw. sind die Energieabsorber zwischen starr mit dem Fahrzeugaufbau verbundenen Bauteilen und dem schwenkbaren Träger angeordnet.

Anhand der Figuren, welcher ein Ausführungsbeispiel der Erfindung darstellen, wird die Erfindung noch näher erläutert.

Es zeigt:
- Figur 1: in Explosivdarstellung, die Bestandteile eines Ausführungsbeispiels;
- Figur 2: in vergrößerter Darstellung einen Teil des beim Ausführungsbeispiel zur Anwendung kommenden Sitzrahmens in Ruheposition; und
- Figur 3: den Teil des Sitzrahmens der Figur 2 bei aktivierter Gurtkraftbegrenzereinrichtung.

Ein in den Figuren dargestellter Kindersitz 1 besitzt einen Sitzbereich 4, dessen Bestandteile an einem Sitzrahmen 11 befestigt sind. Die Bestandteile des Sitzbereiches 4 sind eine Sitzfläche 2, eine Rückenlehne 3 sowie obere Seitenteile 16 und untere Seitenteile 17. Ferner ist in den Kindersitz 1 ein Sicherheitsgurtsystem integriert, welches zwei Schultergurte 5 und zwei beidseitig am Sitzrahmen 11 an Ösen 36 befestigten Beckengurte 23 aufweist. Die Schultergurte 5 und Beckengurte 23 werden beim Anlegen am Körper des Kindes in ein Gurtschloss 18 eingesteckt. Das Gurtschloss 18 sowie Enden der beiden Schultergurte 5 sind mit Einstellgurten 6 verbunden, mit denen eine Gurtlängeneinstellung je nach Größe des Kindes möglich ist. Die beiden Einstellgurte 6 können unterhalb der Sitzfläche 2 in einer nicht näher dargestellten Rasteinrichtungen in den verschiedenen Gurtlängen fixiert werden.

Der Sitzrahmen 11 ist starr ausgebildet und besteht vorzugsweise aus stab- oder rohrförmigen Rahmenteilen. Hierzu sind zwei etwa im rechten Winkel gebogene und im wesentlichen parallel zueinander angeordnete Rahmenteile 26, 27 vorgesehen, die über Verbindungsrahmenteile fest miteinander verbunden sind.

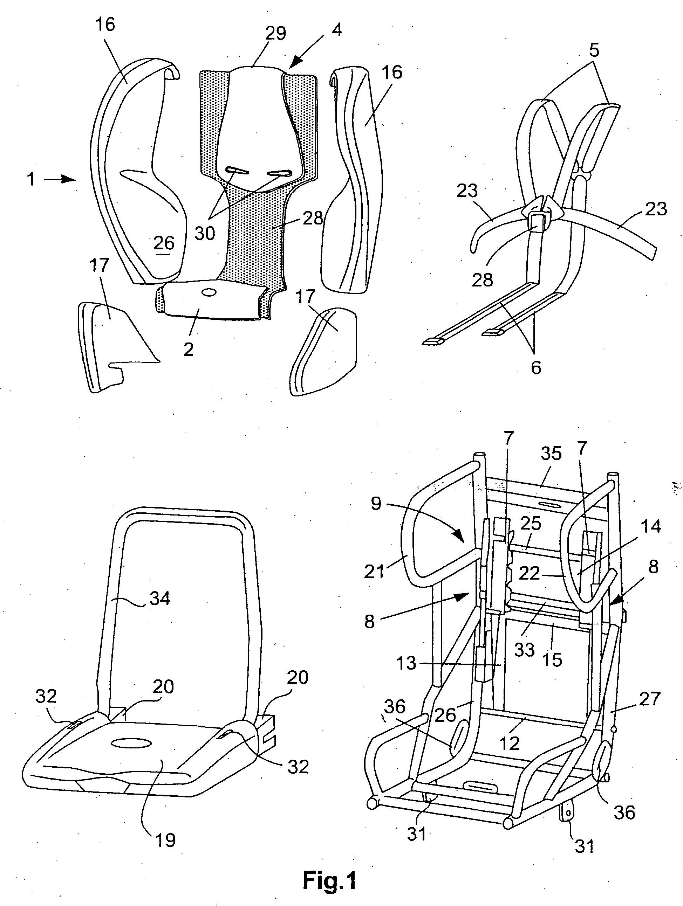

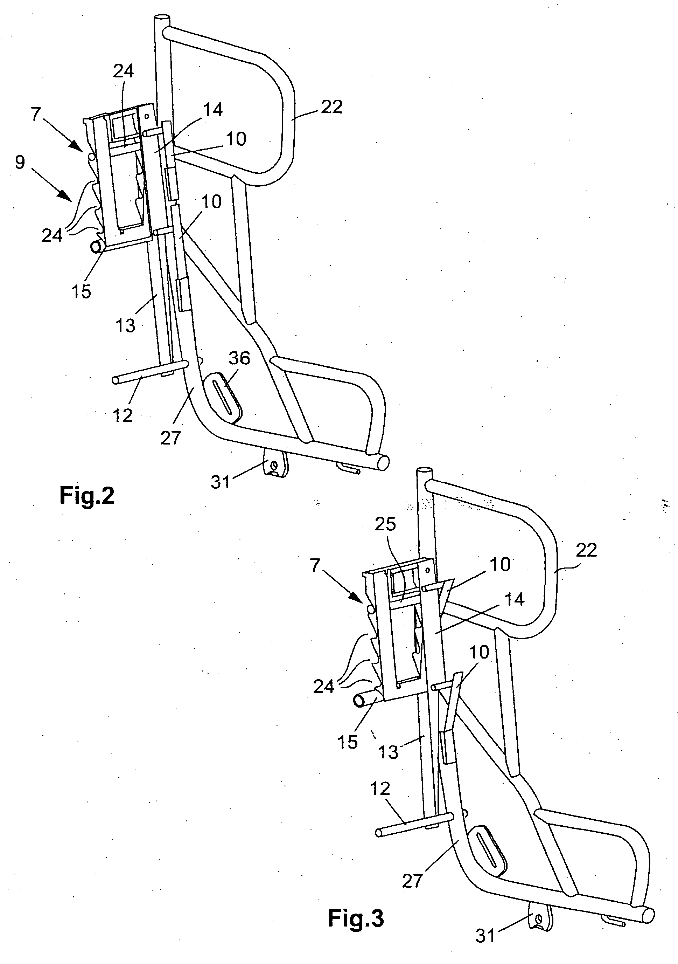

Am Rahmen 11 ist ein schwenkbarer Träger 9, welcher in Figur 1 schematisch dargestellt ist, in einer Schwenkachse 12 schwenkbar gelagert. An diesen schwenkbaren Träger 9 ist die Rückenlehne 3 zumindest in ihrem oberen Bereich mitverschwenkbar befestigt. Am Träger 9 sind verschiedene Rastpositionen 24 (Fig. 2 und 3) für eine Umlerikstellenstütze 25 vorgesehen. Beim dargestellten Ausführungsbeispiel ist die' Umlenkstellenstütze 25 stab- oder rohrförmig ausgebildet. An der Umlenkstellenstütze 25 sind Umlenkstellen 7 vorgesehen, um welche die Schultergurte 5 geführt sind. Die Umlenkstellen 7 und die Umlenkstellenstütze 25 sind aus nicht verformbaren Material.

Der Träger 9 und die dran befestigte Rückenlehne 3 können aus einer in der Figur 2 dargestellten Ruheposition, welche beim normalen Fahrbetrieb des Fahrzeugs vorliegt, nach vorne um die Schwenkachse 12 geschwenkt werden. Die Verschwenkung erfolgt gegen Energieabsorber 10, welche zwischen dem Träger 9 und senkrechten Schenkeln der Rahmenteilen 26 und 27 des starren Sitzrahmens 11 angeordnet sind. Bei den Energieabsorbern 10 handelt es sich um dämpfend wirkende, insbesondere plastisch formbare Formkörper, beispielsweise mit ihren einen Enden an den Rahmenteilen 26, 27 befestigten Blechstreifen, deren freie Enden bei der Energieabsorption verformt werden. Es ist jedoch auch möglich Energieabsorber zwischen dem verschwenkbaren Rahmen 9 und anderen Rahmenteilen des Sitzrahmens 11, beispielsweisen vertikalen Rahmenteilen 21, 22 vorzusehen. In den Figuren 2 und 3 sind ein Abschnitt einer Seite (rechte Seite) des Trägers 9 und der zugeordnete Rahmenteil 27 dargestellt. Die andere Seite (linke Seite) des Trägers 9 besitzt die gleiche Ausgestaltung.

Beim dargestellten Ausführungsbeispiel ist der Träger 9 zweiteilig ausgebildet und besteht aus einem unteren Trägerteil 13 und einem oberen Trägerteil 14. Die beiden Trägerteile 13 und 14 sind in einer Schwenkachse 15 miteinander verbunden. Die Schwenkachse 15 liegt oberhalb der Schwenkachse 12, welche im unteren Bereich der Rückenlehne 3 an den beiden etwa rechtwinkelig gebogenen parallelen Rahmenteilen 26, 27 des starren Sitzrahmens 11'gelagert ist.

Beim dargestellten Ausführungsbeispiel ist der Träger 9 rahmenförmig ausgebildet. Es ist jedoch auch möglich, den Träger 9 und seine Trägerteile 13, 14 ganz oder teilweise plattenförmig auszubilden.

Die Rastpositionen 24 für die Umlenkstellenstütze 25 befinden sich zwischen dem oberen Ende des Trägers 9 und der Schwenkachse 15. Die Energieabsorber 10 sind beidseits des Trägers am oberen Ende des Trägers 9 oder in der Nähe des oberen Trägerendes sowie in Höhe der Schwenkachse 15 oder in der Nähe Schwenkachse 15 angeordnet.

Für kleine Kinder wird die Umlenkstellenstütze 25 in der untersten Rastposition 24, welche unmittelbar oberhalb der Schwenkachse 15 liegen, fixiert. In einem Crashfall wirken daher die vom vorverlagerten Körper des Kindes über die Schultergurte 5 auf den Rahmen 9 übertragenen Kräfte im wesentlichen nur auf das untere Trägerteil 13. Bei der Vorverlagerung des unteren Trägerteils 13 wirken daher die in Höhe der Schwenkachse 15 angeordneten Energieabsorber 10 bei der Gurtkraftbegrenzung.

Bei großen Kindern wird die Umlenkstellenstütze 25 in die weiter oben liegenden Rastpositionen 24 fixiert, so dass in einem Crashfall auch die oben liegenden Energieabsorber 10 mit vergrößerter Hebellänge bei der gleichzeitigen Vorwärtsschwenkung der Trägerteile 13 und 14 zur Wirkung kommen.

An Stelle eines zweiteiligen Trägers 9 kann auch ein einteiliger Träger, der bei kleinen Kindern mit verkürzter Hebelarmlänge etwa entsprechend dem unteren Trägerteil 13 oder bei großen Kindern mit vergrößerter Hebelarmlänge entsprechend der Höhe der beiden Trägerteile 13 und 14 zum Einsatz kommt .

Bei einem Kindersitz 1 mit einem zweiteiligen Träger 9 kann die Rückenlehne 3 ein an einem Lehnengrundkörper 28 in der Höhe verschiebbares Lehnenteil 29 aufweisen. Im verschiebbaren Lehnenteil 29 ist ein Führungsschlitzpaar 30 vorgesehen, durch welche die Schultergurte 5 zu den Umlenkstellen 7 geführt sind. Für die Einstellung der Umlenkstellen 7 in verschiedene Höhenpositionen können die Führungsschlitze 30 in einfacher Weise mitverstellt werden. Im Lehnengrundkörper 28 sind entlang dieser Höhenverstellung entsprechende Ausnehmungen vorgesehen. Es ist jedoch auch möglich, den verschiedenen Rastpositionen 24 zugeordnete Führungsschlitzpaare in der Rückenlehne 3 vorzusehen.

Beim dargestellten Ausführungsbeispiel befinden sich die Energieabsorber 10 zwischen dem schwenkbaren Träger 9 und entsprechenden Rahmenteilen 26 und 27 des starren Sitzrahmens 11. Es ist auch möglich die Energieabsorber beispielsweise in Form von Torsionsstäben in den Achsen 12 und 15 vorzusehen.

Der starre Sitzrahmen 11 kann mit Hilfe von Rastelementen 31, welche an den etwa horizontal verlaufenden Schenkeln der rechtwinkelig gebogenen Rahmenteile 26 und 27 befestigt sind, an einem Isofix-Träger 19 befestigt werden. Hierzu werden die Rastelemente 31 durch entsprechende Öffnungen 32 am Isofix-Träger 19 hindurch gesteckt und am Isofix-Träger 19 verrastet. Der Isofix-Träger 19 lässt sich in bekannter Weise über Steckverbindungen 20 mit einem nicht näher dargestellten, entsprechenden Bauteil des Fahrzeugsitzes, das starr mit dem Fahrzeugaufbau verbunden ist, fest verbinden. Auf diese Weise erreicht man eine starre Lagerung der Schwenkachse 12, des Trägers 9 am Fahrzeugaufbau. Hierdurch erreicht man eine zusätzliche Verbesserung der Gurtkraftbegrenzerwirkung, beim Ausführungsbeispiel des Kindersitzes 1. Die gurtkraftbegrenzte Bewegung des Trägers 9 und der mitbewegten Rückenlehne erfolgt gegen letztlich am Fahrzeugaufbau abgestützte Energieabsorber 10.

Der starre Rahmen 11 kann mittels eines Bügels 33, der an den beiden im wesentlichen senkrechten Schenkeln der rechtwinkelig gebogenen Rahmenteile 26 und 27 befestigt ist, zusätzlich am Isofix-Träger 19 befestigt sein. Hierzu besitzt der Isofix-Träger 19 eine Lehnenstütze 34, über welche der Bügel 33 geschoben wird. Auf diese Weise ist der Sitzrahmen 11 und damit der Kindersitz 1 gegen ein Nachvornekippen zusätzlich gesichert. Als zusätzliche Sicherung gegen ein Nachvornekippen des Kindersitzes 1 kann auch ein Verankerungsband (Top Tether), welches an einem oben liegenden Rahmenteil 35 des Sitzrahmens 11 befestigt ist und am Fahrzeug― aufbau verankert ist, in bekannter Weise vorgesehen sein.

### [Bezugszeichenliste]

- 1: Kindersitz
- 2: Sitzfläche
- 3: Rückenlehne
- 4: Sitzbereich
- 5: Schultergurte
- 6: Einstellgurte
- 7: Umlenkstellen
- 8: Kraftbegrenzereinrichtung
- 9: schwenkbarer Träger
- 10: Energieabsorber
- 11: Sitzrahmen
- 12: Schwenkachse
- 13, 14: Trägerteile
- 15: Schwenkachse
- 16.: obere Seitenteile
- 17: untere Seitenteile
- 18: Gurtschloss
- 19: Isofix-Träger
- 20: Steckverbindungen
- 21, 22: Rahmenteile
- 23: Beckengurte
- 24: Rastpositionen
- 25: Umlenkstellenstütze
- 26, 27: rechtwinkelig gebogene Rahmenteile
- 28: Lehnengrundkörper
- 29: verschiebbares Lehnenteil
- 30: Führungsschlitze
- 31: Rastelemente
- 32: Öffnungen
- 33: Bügel
- 34: Lehnenstütze
- 35: oben liegendes Rahmenteil
- 36: Ösen

## Patentansprüche

1. Kindersitz, welcher an einem Fahrzeugsitz zu befestigen ist, mit einem eine Sitzfläche und eine Rückenlehne aufweisenden Sitzbereich, der auf einem starr ausgebildeten Sitzrahmen (11) angeordnet ist, mit sitzintegrierten Schultergurten, welche um Umlenkstellen im Bereich der Rückenlehne für verschiedene Schulterhöhen geführt sind, und einer wenigstens einen Energieabsorber aufweisenden Kraftbegrenzereinrichtung zur Verringerung der Rückhaltekräfte der Schultergurte, **dadurch gekennzeichnet, dass** die Umlenkstellen (7) und die Rückenlehne (3) oder Teile der Rückenlehne (3) an einem gegenüber dem Sitzrahmen (11) schwenkbaren Träger (9) angeordnet sind, wobei an dem Träger (9) die Rückenlehne (3) zumindest in ihrem oberen Bereich mitverschwenkbar befestigt ist und der Träger (9) gegen den wenigstens einen Energieabsorber (10) der Kraftbegrenzereinrichtung (8), welche zwischen dem Träger (9) und dem Sitzrahmen (11) angeordnet ist, um eine unterhalb der Umlenkstellen (7) liegende Schwenkachse (12) verschwenkbar ist.

2. Kindersitz nach Anspruch 1,
**dadurch gekennzeichnet, dass** die Kraftbegrenzereinrichtung (8) in unterschiedlichen Höhen angeordnete Energieabsorber (10) aufweist.

3. Kindersitz nach Anspruch 1 oder 2,
**dadurch gekennzeichnet, dass** der schwenkbare Träger (9) aus wenigstens zwei Trägerteilen (13, 14) besteht, die in einer weiteren Schwenkachse (15) miteinander verbunden sind.

4. Kindersitz nach Anspruch 3,
**dadurch gekennzeichnet, dass** die beiden Schwenkachsen (12, 15) parallel zueinander angeordnet sind. ,

5. Kindersitz nach einem der Ansprüche 1 bis 4,
**dadurch gekennzeichnet, dass** der wenigstens eine Energieabsorber (10) in einer oder in beiden Schwenkachsen (12, 15) angeordnet ist.

6. Kindersitz nach einem der Ansprüche 1 bis 5,
**dadurch gekennzeichnet, dass** die Umlenkstellen (7) aus nicht verformbaren Material bestehen.

7. Kindersitz nach einem der Ansprüche 1 bis 6,
**gekennzeichnet durch** seine Ausbildung als Vorwärtssitz.

8. Kindersitz nach einem der Ansprüche 1 bis 7,
**dadurch gekennzeichnet, dass** der schwenkbare Träger (9) aus einer bei normalem Fahrbetrieb vorgesehenen Ruheposition nach Vorne schwenkbar ist.

9. Kindersitz nach einem der Ansprüche 1 bis 8,
**dadurch gekennzeichnet, dass** der schwenkbare Träger (9) zumindest teilweise rahmenförmig oder zumindest teilweise plattenförmig ausgebildet ist.

10. Kindersitz nach einem der Ansprüche 1 bis 9,
**dadurch gekennzeichnet, dass** der Sitzrahmen (11) mittels einer starren Verbindung (19, 20) mit dem Fahrzeugaufbau starr verbindbar ist.

11. Kindersitz nach Anspruch 10,
**dadurch gekennzeichnet, dass** die starre Verbindung (19, 20) als Steckverbindung ausgebildet ist.
